# EUROPÄISCHE PATENTSCHRIFT

(11) **EP 1 917 381 B1**
(45) Veröffentlichungstag und Bekanntmachung des Hinweises auf die Patenterteilung: **10.04.2013**
(21) Anmeldenummer: 06764305.6
(22) Anmeldetag: 07.08.2006
(51) Int. Cl.: C23F 1/18, C23F 1/28, C01B 15/037

(54) **STABILISIERTE ÄTZLÖSUNGEN FÜR CU- UND CU/NI-SCHICHTEN**
STABILIZED ETCHING SOLUTIONS FOR CU AND CU/NI LAYERS
SOLUTIONS D'ATTAQUE STABILISEES POUR COUCHES CU ET CU/NI

(30) Priorität: 12.08.2005 DE 102005038414
(43) Veröffentlichungstag der Anmeldung: 07.05.2008
(73) Patentinhaber: BASF SE, 67056 Ludwigshafen (DE)
(72) Erfinder: FLÜGGE, Martin, 65187 Wiesbaden (DE); MELLIES, Raimund, 64807 Dieburg (DE); GOELZENLEUCHTER, Thomas, 64572 Büttelborn (DE); SCHWAGER, Marianne, 64331 Weiterstadt (DE); OESTEN, Ruediger, 67227 Frankenthal (DE)
(86) Internationale Anmeldenummer: PCT/EP2006/065104
(87) Internationale Veröffentlichungsnummer: WO 2007/020206

(56) Entgegenhaltungen:
- EP-A1- 0 426 949
- JP-A- 7 235 752
- JP-A- 8 311 663
- JP-A- 2004 043 895

## Beschreibung

Die vorliegende Erfindung betrifft neue, lagerstabile Lösungen, mit deren Hilfe in der Halbleitertechnologie gezielt Metallisierungsschichten aus Kupfer aber auch Cu/Ni-Schichten geätzt werden können. Mit den neuen Ätzlösungen ist es möglich, reine Kupfermetallisierungen, Schichten aus Kupfer-Nickel-Legierungen aber auch übereinander liegende Kupfer und Nickelschichten zu ätzen und zu strukturieren.

Aus der Zeitschriften- und Patentliteratur sind an sich Ätzmittel für das Mikrostrukturätzen für Cu- und Ni-Metallisierungen sind seit über 20 Jahren bekannt. Insbesondere sind Ätzmischungen, bestehend aus HNO₃ und H₂O₂ als solche für diesen Zweck bekannt (JP 48103043 oder JP 57089481). In der Patentschrift SU 950799 wird das Ätzen von V-Ni-Cu Multilayer mit HNO₃/H₂O₂-Gemischen und verschiedenen Hilfsstoffen beschrieben. Für das Ätzen von dünnen Kupferschichten können den Mischungen aus HNO₃ und H₂O₂ auch andere Säuren und Hilfsstoffe zugesetzt sein (JP 50140333 von 1974 oder SU 929738).

Zur Stabilisierung von sauren H₂O₂-haltigen Ätzmischungen und zur Verhinderung der Zersetzung des H₂O₂ durch Fe-Ionen ist aus DE 2405214 A die Zugabe von EDTMPA (Dequest^{®} 2041) bekannt.

Gegenwärtig werden in der Halbleitertechnik zunehmend diverse Multilayerschichten eingesetzt, die Cu enthalten oder Schichten, die nur aus Kupfer bestehen.

Insbesondere werden Multilayerschichten bestehend aus Cu- und Ni-Schichten eingesetzt, die nach oben durch eine Edelmetallschicht (Au) für Außenkontakte und nach unten durch eine Ti oder TiW-Schicht abgeschlossen sind.

Üblicherweise werden diese Schichten einzeln durch individuelle Ätzlösungen geätzt. Dadurch ist zur Strukturierung eine größere Anzahl von Prozessschritten entsprechend des Schichtaufbaus erforderlich. Gleichzeitig erhöht die Zahl der Prozessschritte die Anforderungen an Verfahrensgenauigkeit, da mögliche Restschichten jeweils beim nachfolgenden Prozessschritt sich äußerst störend auswirken können.

Insbesondere Schichtfolgen von Cu und Ni werden üblicherweise bisher in separaten Ätzschritten mit unterschiedlichen Ätzlösungen bearbeitet.

So kann z. B. eine Kupferschicht mittels einer H₂O₂/NH₄OH-Lösung geätzt werden, während sich eine Nickelschicht mittels einer sauren Ammoniumperoxodisulfatlösung ätzen lässt.

Eine Lösung aus HNO₃/H₂O₂ kann verwendet werden, um eine Schichtfolge aus Cu und Ni in einem einzigen Arbeitschritt zu ätzen. Bei Verwendung von entsprechenden Lösungen für das Ätzen von Cu- und Ni-Schichten kommt es jedoch zu stark abnehmenden Ätzraten während des Ätzens. Die Ursache hierfür ist darin zu suchen, dass durch den Eintrag von Cu- und/oder Ni-lonen in die Lösung ein katalytischer Zerfall des in der Lösung enthaltenen Wasserstoffperoxids einsetzt.

Dadurch verändert sich die Zusammensetzung der Ätzlösung nach dem ersten Ätzangriff auf Cu-haltige Metallisierungen unabhängig davon, ob ein weiterer Cu-Eintrag erfolgt oder nicht. Nach dem Verbrauch des in der Ätzlösung enthaltenen H₂O₂ ändern sich die Ätzraten für Cu und Ni dramatisch. Dieses bedeutet, dass die Verwendung von unstabilisierten Ätzlösungen auf der Basis von HNO₃/H₂O₂-Gemischen für das Ätzen von Cu- und Ni-Schichten nur eingeschränkt möglich ist und stabile Ätzraten nur mit größerem technologischen Aufwand erzielbar wären.

Aufgabe der vorliegenden Erfindung ist es daher, preiswerte stabilisierte Ätzlösungen zur Verfügung zu stellen, durch die sowohl aufeinanderfolgende Kupfer- und Nickel-Schichten als auch Metallisierungen aus Cu/Ni-Legierungen in einfacher Weise mit gleichbleibender Ätzrate geätzt werden können. Insbesondere ist es Aufgabe der vorliegenden Erfindung eine Ätzlösung zur Verfügung zu stellen, mit der Schichtfolgen aus Cu und Ni in einem einzigen Arbeitschritt geätzt werden können. Ganz besonders ist es Aufgabe der vorliegenden Erfindung verbesserte Ätzlösungen zur Verfügung zu stellen, worin die katalytische Zersetzung des enthaltenen H₂O₂ vermindert ist, und während des Ätzvorgangs in der Lösung sich anreichernde Kupfer- und gegebenenfalls Nickel-Ionen sich nicht negativ auf die Qualität der bearbeiteten Halbleiterprodukte auswirken.

Die Lösung der vorliegenden Aufgabe erfolgt durch neue, stabilisierte Ätzlösungen zum Ätzen von Kupfer- und Nickelschichten, oder von Schichten aus entsprechenden Legierungen, enthaltend Salpetersäure (HNO₃), Wasserstoffperoxid (H₂O₂), Zitronensäure und Wasser, und zwar durch Ätzlösungen, welche Salpetersäure in einer Menge von 5 bis 50 Gew.-%, bezogen auf die Gesamtzusammensetzung, und Wasserstoffperoxid in einer Menge von 1 bis 10 Gew.-%, bezogen auf die Gesamtzusammensetzung enthalten. In diesen Lösungen kann Zitronensäure in einer Menge von 0,5 bis 10 Gew.-%, bezogen auf die Gesamtzusammensetzung enthalten sein. Besonders gute Ätzergebnisse werden mit entsprechenden Lösungen gefunden in denen Salpetersäure (HNO₃) in einer Menge von 15 bis 35 Gew.-%, bezogen auf die Gesamtzusammensetzung, Wasserstoffperoxid (H₂O₂) in einer Menge von 2 bis 6 Gew.-%, bezogen auf die Gesamtzusammensetzung, und Zitronensäure in einer Menge von 2,5 bis 6,5 Gew.-%, bezogen auf die Gesamtzusammensetzung enthalten sind. Erfindungsgemäß können in den neuen Ätzlösungen darüber hinaus weitere Substanzen enthalten sein, und zwar solche die die Eigenschaften der Lösungen während der Durchführung des Ätzvorgangs verbessern und in Folge zu besseren Produktqualitäten führen. Solche Zusätze können Additive, wie Netzmittel oder Tenside sein.

Erfindungsgemäß können diese Ätzlösungen in der Halbleitertechnologie verwendet werden.

Gegenstand der Erfindung ist ebenfalls ein Verfahren zum Ätzen von aufeinanderfolgenden Kupfer- und Nickelschichten in der Halbleitertechnologie, worin Halbleiterelemente, die entsprechende Schichten aufweisen in eine Ätzlösung, wie oben beschrieben, für eine ausreichend lange Zeit getaucht werden und nachdem in einem einzigen Schritt die Metallschichten weggeätzt worden sind, aus der Ätzlösung herausgenommen werden und mit Wasser gewaschen und getrocknet werden.

In der Vergangenheit hat es nicht an Versuchen gefehlt, das in HNO₃/H₂O₂-haltige Gemischen wirksame H₂O₂ zu stabilisieren, um eine gleichbleibend hohe Ätzrate bei Verwendung von entsprechenden Lösungen aufrechterhalten zu können. Bislang wurde jedoch kein Zusatz gefunden, der die katalytische Zersetzung des Wasserstoffperoxids verhindert und gleichzeitig nicht die Eigenschaften der Ätzlösung nachteilig beeinflusst. Wesentlich für die Wahl eines geeigneten stabilisierenden Zusatzes ist, dass durch seine Zugabe zu den verwendeten Lösungen keine Beeinträchtigungen der übrigen Schichten des unter üblichen Prozessbedingungen behandelten Halbleiterelements auftreten dürfen.

Überraschend wurde nun gefunden, dass sich durch die Zugabe von Zitronensäure zu HNO₃/H₂O₂-haltigen Ätzlösungen die Zersetzung von Wasserstoffperoxid in Gegenwart von Kupfer-Ionen weitgehend verhindern lässt. Selbst bei einer Anreicherung von entsprechenden Kupfer- und Nickel-Ionen in der Ätzlösung verläuft der Ätzvorgang noch mit hoher Geschwindigkeit. Noch bei einem Gehalt an entsprechenden Metall-Ionen von insgesamt etwa 5 Gew.-% in der Lösung erfolgt der Ätzvorgang noch mit einer nahezu unveränderten Geschwindigkeit im Vergleich zur Ätzrate mit frischer Ätzlösung, die noch frei ist von verunreinigenden Metallionen. Darüber hinaus bleibt die inhibierende Wirkung auf die durch Kupfer- bzw. Nickel-Ionen induzierte Zersetzung von H₂O₂ auch bei höheren Temperaturen erhalten. Es ist daher möglich, mit diesen neuen Ätzlösungen sowohl bei niedrigen Temperaturen als auch bei erhöhten Temperaturen bis zu 90 °C mit nahezu gleichbleibenden Ätzraten zu arbeiten.

Die Konzentration der zugesetzten Zitronensäure kann im Bereich von 0,5 - 10 Gew.-% bezogen auf die Gesamtzusammensetzung liegen, wobei der Bereich von 2,5 bis 6,5 Gew.-% bevorzugt ist.

Die Lösungen zum Ätzen von Metallisierungen aus reinen Kupfer- oder Nickelschichten oder aus entsprechenden Legierungen enthalten 5 bis 50 Gew.-% HNO₃ bezogen auf die Gesamtzusammensetzung Bevorzugt werden Ätzlösungen eingesetzt worin die Konzentration im Bereich von 15 bis 35 Gew.-% liegt. In diesen Lösungen liegt der Gehalt an H₂O₂ im Bereich von 1 bis 10 Gew.-%, bezogen auf die Gesamtzusammensetzung. Besonders bevorzugt sind Zusammensetzungen mit einem H₂O₂-Gehalt im Bereich zwischen 2 bis 6 Gew.-%.

Zur Herstellung der erfindungsgemäßen Ätzlösungen kann hoch aufgereinigte Salpetersäure mit einer Konzentration von 69, 5 Gew.-% und einer Qualität, wie sie üblicherweise in Halbleitertechnologie eingesetzt wird, verwendet werden. Das als Ätzmittel wirksame Wasserstoffperoxid kann in Form einer hochreinen, wässrigen Lösung verwendet werden. Diese Lösung kann als unstabilisiert sein, wenn sie frisch hergestellt worden ist. Sie kann aber auch stabilisiert sein, beispielsweise durch geeignete Mengen Dipicolinsäure oder EDTMPA. Bevorzugt wird H₂O₂ als aufgereinigte, 31 Gew.-%ige, handelsübliche, wässrige Lösung verwendet, die mit Dipicolinsäure stabilisiert ist. Zur geeigneten Verdünnung der Ätzlösungen werden entsprechende Mengen an hoch aufgereinigtem Wasser mit einer für die Anwendung in Halbleitertechnologie geeigneten Qualität zugegeben.

Die Herstellung der Ätzlösungen kann erfolgen, indem eine abgewogene Menge Zitronensäure einer geeigneten Menge unverdünnter Wasserstoffperoxidlösung, die stabilisiert sein kann, zugesetzt wird. Die so erhaltene zitronensäurehaltige Wasserstoffperoxidlösung kann nun in geeigneter Weise, gegebenenfalls unter Kühlung, mit einer abgemessenen Menge konzentrierter Salpetersäure vermischt und mit hoch aufgereinigtem Wasser verdünnt werden.

Es hat sich auch als sinnvoll erwiesen, die Zitronensäure in dem zur Verdünnung verwendeten Wasser vorab zu lösen und diese Lösung zu dem aus Salpetersäure und Wasserstoffperoxidlösung hergestellten Gemisch zu geben.

In der technischen Anwendung hat sich die erste Variante als geeigneter erwiesen.

Es werden auf die beschriebene Weise wässrige Ätzlösungen erhalten, die neben Salpetersäure, Wasserstoffperoxid und Wasser Zitronensäure als Stbilisator für das enthaltene Wasserstoffperoxid enthält und gegebenenfalls in geringen Mengen einen oder mehrere Stabilisatoren, die in der konzentrierten Wasserstoffperoxidlösung enthalten waren. Wie oben bereits beschrieben kann es sich bei letzteren Verbindungen um solche wie Dipicolinsäure, EDTMPA oder auch andere handelsüblich eingesetzte Stabilisatoren handeln.

Ohne weitere Zusätze sind diese Lösungen in besonderer Weise in der Halbleitertechnologie zum Ätzen von Kupfer- und Nickel-Schichten bzw. von entsprechenden Legierungsschichten geeignet und können über längere Zeit in dem Ätzprozess eine nahezu unveränderte Ätzrate aufweisen.

Falls erforderlich, können auch zur Verbesserung des Ätzvorgangs zu diesen erfindungsgemäßen Lösungen in geringen Mengen für die Halbleitertechnologie geeignete Additive, wie Netzmittel, Tenside u. a., zugefügt werden. Solche Additive dienen zur Verbesserung der Benetzbarkeit der metallischen Oberflächen und können so zur Verbesserung des Ätzvorgangs beitragen. In den durchgeführten Untersuchungen hat sich jedoch erwiesen, dass entsprechende Additive nicht zwingend notwendig sind, da im allgemeinen ohne weitere Zusätze bei hohen Ätzraten ausgezeichnete Ätzergebnisse erzielt werden.

Wie oben bereits angesprochen, sind die erfindungsgemäßen Ätzlösungen problemlos auch bei erhöhten Temperaturen nahezu unverändert wirksam und ausreichend stabil. Sie sind einsetzbar bis zu einer Temperatur von etwa 90 °C. Besonders gute Ergebnisse werden bei der Verwendung der Lösungen im Temperaturbereich von etwa 10 bis 40 °C erzielt. Die in der Halbleitertechnologie durchzuführenden Ätzschritte können daher bevorzugt bei Raumtemperatur erfolgen.

Die Verwendung der beschriebenen neuen Ätzlösungen zum Ätzen von Cu/Ni-Schichten in der Halbleitertechnologie erfolgt in an sich bekannter Weise. Die zu behandelnden Wafer, auf denen Kupfer-, Nickel- oder Kupfer/Nickel-Schichten geätzt werden sollen, werden in ein Tauchbad mit Ätzlösung, wie oben beschrieben, bei einer geeigneten Temperatur eingetaucht. Je nach Dicke der zu ätzenden Metallschicht wird der Ätzvorgang nach einer Ätzdauer von 20 Sekunden bis zu einigen Minuten beendet, indem die Wafer aus der Ätzlösung herausgenommen werden und mit hoch reinem Wasser gespült werden. Der Spülvorgang kann mehrere Male erfolgen. Anschließend werden die Wafer in bekannter Weise getrocknet.

Die neuen Zusammensetzungen der erfindungsgemäßen Ätzlösungen haben den Vorteil, dass über die gesamte Dauer des Prozessschritts mit hoher Ätzrate gearbeitet werden kann und die Ätzlösung länger verwendet werden kann. Gleichzeitig hat sich gezeigt, dass durch die verkürzte Ätzdauer nachteilige Einflüsse der Ätzlösung auf die verbleibende Struktur des Wafers nahezu vollständig vermieden werden können. Dieses gilt insbesondere für sonst häufig auftretende "lift-off"-Effekte und in Bezug auf eine unerwünschte Redeposition von Metallionen auf der Waferoberfläche. Es hat sich in diesem Zusammenhang gezeigt, dass durch den Zusatz von Zitronensäure die katalytische Zersetzung des Wasserstoffperoxids durch Cu- bzw. Ni-lonen ebenso unterbunden wird wie eine Kontamination der Oberflächen durch Ätzprodukte. In diesem Zusammenhang hat sich auch gezeigt, dass der Ätzprozess unter Einwirkung der erfindungsgemäßen Zusammensetzungen offensichtlich nach einem anderen Mechanismus verläuft als bei Verwendung der für diese Metallisierungsschichten bisher eingesetzten Ätzlösungen. Das Lösen der Metallisierungsschichten erfolgt offensichtlich nicht durch das einfache Ablösen von Metallteilchen sondern offensichtlich durch ein Auflösen der freiliegenden Metallschichten. Entsprechend können in der Ätzlösung nach dem erfolgten Ätzprozess auch so gut wie keine Teilchen festgestellt werden. Dieses hat den besonderen Vorteil, dass auch keine Qualitätsminderungen durch unerwünschtes Absetzen von Teilchen auf den Waferoberflächen auftritt.

Außerdem wird durch die kurzen Reaktionszeiten ein mögliches Anätzen der freigelegten Schichten und übrigen Flächen des Wafers auf ein Minimum reduziert.

Da die erfindungsgemäßen Ätzlösungen in der Lage sind, sowohl Kupfer- als auch Nickelschichten zu ätzen, ist es ohne weiteres möglich, mit diesen Lösungen aufeinanderfolgende Kupfer- und Nickelschichten in einem einzigen Prozessschritt zu ätzen, so dass der bisherige zweistufige Ätzprozess unter Einsatz von unterschiedlichen Ätzlösungen für Kupfer und Nickel durch einen einzigen Prozessschritt ersetzt werden kann und lediglich nur noch eine Ätzlösung verwendet werden muss. Auf diese Weise führt die Verwendung der erfindungsgemäßen Ätzlösungen zu erheblichen Material-, Zeit- und Kostenersparnissen.

Darüber hinaus können durch den einstufigen Ätzschritt für aufeinanderfolgende Kupfer- und Nickelschichten Probleme vermieden werden, die sich bisher durch verbliebene Restschichten von Kupfer und Nickel ergaben.

Folglich können durch Verwendung der erfindungsgemäßen Ätzlösungen hochwertige Ätzergebnisse erzielt werden, die bisher vergleichbar nur unter wesentlich höherem Aufwand und mit höherem Kostenaufwand erhalten werden konnten.

## Patentansprüche

1. Stabilisierte Ätzlösungen zum Ätzen von Kupfer- und Nickelschichten, oder von Schichten aus entsprechenden Legierungen, enthaltend Salpetersäure (HNO₃), in einer Menge von 5 bis 50 Gew.-%, bezogen auf die Gesamtzusammensetzung, und Wasserstoffperoxid in einer Menge von 1 bis 10 Gew.-%, bezogen auf die Gesamtzusammensetzung, Zitronensäure und Wasser.

2. Ätzlösungen gemäß Anspruch 1, enthaltend Zitronensäure in einer Menge von 0,5 bis 10 Gew.-%, bezogen auf die Gesamtzusammensetzung.

3. Ätzlösungen gemäß Anspruch 1, enthaltend Salpetersäure (HNO₃) in einer Menge von 15 bis 35 Gew.-%, bezogen auf die Gesamtzusammensetzung, Wasserstoffperoxid (H₂O₂) in einer Menge von 2 bis 6 Gew.-%, bezogen auf die Gesamtzusammensetzung, und Zitronensäure in einer Menge von 2,5 bis 6,5 Gew.-%, bezogen auf die Gesamtzusammensetzung.

4. Ätzlösungen gemäß der Ansprüche 1 bis 3, enthaltend Additive, wie Netzmittel oder Tenside.

5. Verwendung von Ätzlösungen gemäß der Ansprüche 1 bis 4 in der Halbleitertechnologie.

6. Verfahren zum Ätzen von aufeinanderfolgenden Kupfer- und Nickelschichten in der Halbleitertechnologie, **dadurch gekennzeichnet, dass** Halbleiterelemente, die entsprechende Schichten aufweisen in eine Ätzlösung gemäß der Ansprüche 1 bis 4 für eine ausreichend lange Zeit getaucht werden und nachdem in einem einzigen Schritt die Metallschichten weggeätzt worden sind, aus der Ätzlösung herausgenommen werden und mit Wasser gewaschen und getrocknet werden.

## Claims

1. A stabilized etch solution for etching copper layers and nickel layers, or layers of corresponding alloys, comprising nitric acid (HNO₃), in an amount of 5% to 50% by weight, based on the overall composition, and hydrogen peroxide in an amount of 1% to 10% by weight, based on the overall composition, citric acid, and water.

2. The etch solution according to claim 1, comprising citric acid in an amount of 0.5% to 10% by weight, based on the overall composition.

3. The etch solution according to claim 1, comprising nitric acid (HNO₃) in an amount of 15% to 35% by weight, based on the overall composition, hydrogen peroxide (H₂O₂) in an amount of 2% to 6% by weight, based on the overall composition, and citric acid in an amount of 2.5% to 6.5% by weight, based on the overall composition.

4. The etch solution according to claims 1 to 3, comprising additives, such as wetting agents or surfactants.

5. The use of an etch solution according to claims 1 to 4 in semiconductor technology.

6. A process for etching successive copper layers and nickel layers in semiconductor technology, which comprises immersing semiconductor elements having corresponding layers in an etch solution according to claims 1 to 4 for a sufficiently long time and, after the metal layers have been etched away in a single step, removing the semiconductor elements from the etch solution, washing them with water, and drying them.

## Revendications

1. Solutions de décapage stabilisées pour le décapage de couches de cuivre et de nickel ou de couches d'alliages correspondants, contenant de l'acide nitrique (HNO₃) en une quantité de 5 à 50 % en poids, par rapport à l'ensemble de la composition, et du peroxyde d'hydrogène en une quantité de 1 à 10 % en poids, par rapport à l'ensemble de la composition, de l'acide citrique et de l'eau.

2. Solutions de décapage selon la revendication 1, contenant de l'acide citrique en une quantité de 0,5 à 10 % en poids, par rapport à l'ensemble de la composition.

3. Solutions de décapage selon la revendication 1, contenant de l'acide nitrique (HNO₃) en une quantité de 15 à 35 % en poids, par rapport à l'ensemble de la composition, du peroxyde d'hydrogène (H₂O₂) en une quantité de 2 à 6 % en poids, par rapport à l'ensemble de la composition, et de l'acide citrique en une quantité de 2,5 à 6,5 % en poids, par rapport à l'ensemble de la composition.

4. Solutions de décapage selon les revendications 1 à 3, contenant des additifs, tels que des agents mouillants ou des tensioactifs.

5. Utilisation de solutions de décapage selon les revendications 1 à 4 dans la technologie des semiconducteurs.

6. Procédé de décapage de couches de cuivre et de nickel successives dans la technologie des semiconducteurs, **caractérisé en ce que** des éléments semiconducteurs comprenant des couches correspondantes sont immergés dans une solution de décapage selon les revendications 1 à 4 pendant une durée suffisamment longue et, après que les couches métalliques aient été éliminées par décapage en une étape unique, extraits de la solution de décapage et lavés avec de l'eau et séchés.
